# EUROPÄISCHE PATENTANMELDUNG

(11) **EP 1 503 510 A2**
(43) Veröffentlichungstag der Anmeldung: **02.02.2005**
(21) Anmeldenummer: 04017913.7
(22) Anmeldetag: 29.07.2004
(51) Int. Cl.: H04B 1/40

(54) **Sende- und Empfangsvorrichtung mit wenigstens zwei Paaren aus je einem Sende-Leistungsverstärker und einem rauscharmen Eingangsverstärker**

(30) Priorität: 01.08.2003 DE 10336292
(71) Anmelder: ATMEL Germany GmbH, 74072 Heilbronn (DE)
(72) Erfinder: Bopp, Matthias, 74243 Langenbrettach (DE); Gerlach, Stephan, 74223 Flein (DE)

(57) **Zusammenfassung**

Vorgestellt wird eine Sende- und Empfangsvorrichtung (10) mit wenigstens zwei Paaren aus je einem Sendeleistungsverstärker (22, 24, 26) und einem rauscharmen Eingangsverstärker (28, 30, 32), wobei die Paare verschiedenen Frequenzbereichen zugeordnet sind, und wobei jeweils wenigstens ein Sende-Leistungsverstärker (22, 24, 26) und wenigstens ein rauscharmer Eingangsverstärker (28, 30, 32) als integrierte Schaltung auf einem gemeinsamen Chip (16, 18, 20) untergebracht ist. Die Vorrichtung (10) zeichnet sich dadurch aus, dass beim Betrieb der Sende- und Empfangsvorrichtung (10) in einem der Frequenzbereiche für die Verstärkung empfangener Signale ein rauscharmer Eingangsverstärker (28, 30, 32) verwendet wird, der auf einem anderen Chip (16, 18, 20) angeordnet ist als der Sendeleistungsverstärker (22, 24, 26), der mit dem rauscharmen Verstärker (28, 30, 32) ein dem Frequenzbereich zugeordnetes Paar bildet. Vorgestellt wird darüber hinaus ein Verfahren zum Betrieb der Vorrichtung (10).

## Beschreibung

Die Erfindung betrifft eine Sende- und Empfangsvorrichtung mit wenigstens zwei Paaren aus je einem Sende-Leistungsverstärker und einem rauscharmen Eingangsverstärker, wobei die Paare verschiedenen Frequenzbereichen zugeordnet sind, und wobei jeweils wenigstens ein Sende-Leistungsverstärker und wenigstens ein rauscharmer Eingangsverstärker zu einer baulichen Einheit zusammengefasst sind.

Ferner betrifft die Erfindung ein Verfahren zum Betrieb einer solchen Sende- und Empfangsvorrichtung.

Eine solche Sende- und Empfangsvorrichtung sowie ein solches Verfahren sind per se bekannt.

Eine Kombination von Sende- Leistungsverstärker mit einem rauscharmen Eingangsverstärker auf einem gemeinsamen Halbleitersubstrat ist seit längerer Zeit per se bekannt. Die baulichen Einheiten werden in der Regel als monolithisch integrierte Schaltkreise auf der Basis verschiedenster Technologien erzeugt, wobei die Silizium-Technologie und Gallium-Arsenid-Varianten zu den gebräuchlichsten Technologien gehören.

Die monolithische Integration eines rauscharmen Eingangsverstärkers (Low Noise Amplifiers LNA) und eines Sende-Leistungsverstärkers (Power Amplifier PA) auf einem gemeinsamen Halbleitersubstratmaterial führt während des Sendebetriebs bei aktivem Sende-Leistungsverstärker zu einer Dissipation von elektrischer Verlustleistung, die das gesamte Halbleitersubstrat einschließlich des rauscharmen Eingangsverstärkers erwärmt. Da der Sende-Leistungsverstärker in der Regel mit einem Mehrfachen der Leistung eines rauscharmen Eingangsverstärkers betrieben wird, heizt sich der rauscharme Eingangsverstärker im Sendebetrieb wesentlich stärker auf als im reinen Empfangsbetrieb. Typische Leistungswerte sind etwa 300 mW für den Sendebetrieb und etwa 10 mW für den Empfangsbetrieb. Die genannte Erwärmung führt zu einer physikalisch bedingten Erhöhung der Rauschzahl, einer Drift von Kennwerten und zu einer Verschlechterung der Empfangseigenschaften des Systems. Selbst ein zeitlich versetzter Betrieb (Zeitschlitzverfahren) der beiden auf einem Chip vereinigten Komponenten führt wegen des thermischen Speicherverhaltens des Halbleitermaterials zu einer Erwärmung, die in unerwünschter Weise auch den rauscharmen Eingangskanal-Verstärker erfasst.

Die thermische bedingte Erhöhung der Rauschzahl F folgt hierbei dem Gesetz: F = K x T x B, wobei F die Rauschzahl, K die Boltzmannkonstante, T die Temperatur und B die betrachtete Frequenz-bandbreite des rauscharmen Eingangsverstärkers darstellt. Zur Abhilfe werden bei speziellen Anwendungen, z. B. in der Raumfahrt oder der Radioastronomie, spezielle Kühlvorrichtungen verwendet, die einen rauscharmen Eingangsverstärker bis in die Nähe des absoluten Nullpunktes hinab kühlen.

Dieser Aufwand kann jedoch aus Kostengründen in der Konsumgüterindustrie im Allgemeinen und bei Mobiltelefonen (zum Beispiel bei GSM-Telefonen) und drahtlosen Datenübertragungssystemen wie WLAN Anwendungen (WLAN = Wireless Local Area Network) im Besonderen nicht getrieben werden. Es ist in diesem Zusammenhang bereits bekannt, einen rauscharmen Eingangsverstärker auf einem Empfangs-Chip und einen Sende-Leistungsverstärker auf einem separaten eigenen Sende-Chip anzuordnen. Durch die räumliche Trennung heizt sich der Empfangs-Chip beim Betrieb des Sende-Chips weniger stark auf als bei einer Integration der beiden Verstärker auf einem Chip. Der Vorteil einer verminderten Aufheizung des Empfangs- oder Eingangs-Chips beim Betrieb des Sendechips wird dabei aber mit dem Nachteil eines weitgehenden Verzichts auf die Vorteile einer monolithischen Integration mehrerer Verstärker auf einem Chip erkauft.

Vor diesem Hintergrund besteht die Aufgabe der Erfindung in der Angabe einer Sende- und Empfangseinrichtung mit verringerter Aufheizung eines rauscharmen Eingangsverstärkers durch den Betrieb eines Sende-Leistungsverstärkers, bei der die Bauraumvorteile und Kostenvorteile einer monolithischen Integration von wenigstens einem rauscharmen Eingangsverstärker und wenigstens einem Sende-Leistungsverstärker möglichst weitgehend beibehalten werden. Ferner besteht die Aufgabe der Erfindung in der Angabe eines Verfahrens zum Betrieb einer solchen Sende- und Empfangsvorrichtung.

Diese Aufgabe wird bei einer Sende- und Empfangsvorrichtung der eingangs genannten Art dadurch gelöst, dass ein Eingangsverstärker eines ersten Paares aus einem Sende-Leistungsverstärker und einem rauscharmen Eingangsverstärker in einer anderen baulichen Einheit untergebracht ist, als der baulichen Einheit, in der sein zugeordneter Sende-Leistungsverstärker untergebracht ist.

Ferner wird diese Aufgabe bei einem Verfahren der eingangs genannten Art dadurch gelöst, dass beim Betrieb der Sende- und Empfangsvorrichtung in einem der Frequenzbereiche, für die Verstärkung empfangener Signale ein rauscharmer Eingangsverstärker verwendet wird, der auf einem anderen Chip angeordnet ist als der Sende-Leistungsverstärker, der mit dem rauscharmen Eingangsverstärker ein dem Frequenzbereich zugeordnetes Paar bildet.

Durch diese Merkmale wird eine räumliche Trennung der Sendefunktionen und der Empfangsfunktion innerhalb eines Frequenzbereiches trotz baulicher Zusammenfassung von Sende-Leistungsverstärkem und Eingangsverstärkern erzielt. Aufgrund der räumlichen Trennung wird der bei einer bestimmten Frequenz benutzte Eingangsverstärker nicht durch den bei der gleichen Frequenz aktiven Sende-Leistungsverstärker aufgeheizt. Das Signal zu Rausch-Verhältnis des aktiven Eingangsverstärkers wird daher nicht durch den aktiven Sende-Leistungsverstärker verschlechtert.

Es ist bevorzugt, dass jeweils wenigstens ein Sende-Leistungsverstärker und wenigstens ein rauscharmer Eingangsverstärker auf einem gemeinsamen Chip als bauliche Einheit zusammengefasst sind.

Ein Vorteil dieser Ausgestaltung besteht darin, dass Sende-Leistungsverstärker und rauscharmer Eingangsverstärker aus Herstellungsgesichtspunkten kostengünstig auf einem monolithisch integrierten Schaltkreis realisiert werden können, ohne dass dabei Nachteile in Form einer Erhöhung der Rauschzahl oder einer Drift von Kennwerten im Betrieb des Eingangsverstärkers auftritt.

Prinzipiell ist der Vorteil der monolithischen Integration um so größer, je mehr die verwendeten Halbleitertechnologien in ihren Eigenschaften sowohl für Sende-Leistungsverstärker mit hohem Wirkungsgrad wie auch für Eingangsverstärker mit niedriger Rauschzahl geeignet sind. Ein scheinbarer Zielkonflikt zwischen einem hohen Wirkungsgrad des Leistungsverstärkers und einer niedrigen Rauschzahl des Eingangsverstärkers wird bei modernen Systemen wie GSM-EDGE (Enhanced Data for GSM Evolution), UMTS oder allgemein CDMA (Code Division Multiple Access) jedoch immer geringer, da diese Systeme Modulationsverfahren im Sendepfad verwenden, die auch Informationen in der Hüllkurve beinhalten. Als Folge werden die Anforderungen an die Linearität des Sende-Leistungsverstärkers beträchtlich gesteigert.

Daher werden Transistoren des Sende-Leistungsverstärkers nicht mehr in der wirkungsgradoptimierten C-Betriebsart (Klasse C), sondern eher in der A-Betriebsart (Klasse A) betrieben, die eine verbesserte Linearität zwischen Verstärker-Eingangssignal und Verstärker-Ausgangssignal zeigt. Die Verbesserung der Linearität geht jedoch zu Lasten des Wirkungsgrades, der in der A-Betriebsart aus physikalischen Gründen niedriger ist als in der komprimierten B- oder C-Betriebsart eines Transistorverstärkers.

Eine weitere Eigenschaft, die für diese Art von Sende-Leistungsverstärkern gefordert wird, ist ein möglichst niedriges Störspektrum im Bereich von Nachbarkanälen, was letztendlich als Forderung nach einer niedriger Rauschzahl interpretiert werden kann.

Somit sind die Anforderungen an eine Kombinations-Technologie für Sende-Leistungsverstärker und rauscharme Eingangsverstärker zu wesentlichen Teilen identisch. Darum können beide Arten von Verstärkern unter Herstellungsgesichtspunkten auf einem gemeinsamen integrierten Schaltkreis kostengünstig und platzsparend kombiniert werden.

Allerdings resultiert aus dem niedrigeren Wirkungsgrad des Sende-Leistungsverstärkers bei gleicher Ausgangsleistung eine erhöhte Verlustwärme und Temperatur des Chips, was einer Integration im Prinzip entgegenstehen würde.

Es ist gerade die Kombination aus einer Integration eines oder mehrerer rauscharmer Eingangs-Verstärker und wenigstens eines Sende-Leistungsverstärkers auf einem Chip in Verbindung mit einer Verteilung der Sendefunktionen und Empfangsfunktionen eines Frequenzbereiches auf mehrere Chips, die in der Summe eine niedrige Rauschzahl des bei einer bestimmten Frequenz aktiven rauscharmen Eingangsverstärkers trotz monolithischer Integration mit einem Sende-Leistungsverstärker ermöglicht.

Diese Verteilung lässt darüber hinaus in den Schaltblöcken, die die Sende- und Empfangssignale generieren bzw. verarbeiten (den Transceivem) eine Kombination und Mehrfachverwendung von ansonsten redundanten Funktionseinheiten zu, was aus Kostengründen angestrebt wird (siehe als Beispiel das Wireless Local Area Network WLAN 2.4 u. 5.2 GHz).

Ferner ist bevorzugt, dass die Sende-Leistungsverstärker und die rauscharmen Eingangsverstärker als monolithisch integrierte Schaltkreise auf Siliziumbasis oder Gallium-Arsenid-Basis realisiert sind.

Durch diese Merkmale kann die Erfindung breit und kostengünstig angeboten werden, da sich solche Schaltkreise mit bekannten Fertigungsverfahren in großen Stückzahlen kostengünstig fertigen lassen.

Eine weitere bevorzugte Ausgestaltung zeichnet sich durch eine Ausführung in Form von gebondeten integrierten Schaltungen, als Flip-Chip in einem Gehäuse oder in Form von Modulen auf einem gesonderten Substratträger aus.

Bei einem gebondeten Chip handelt es sich bekanntlich um eine integrierte Halbleiterschaltung, die über Bonddrähtchen kontaktiert wird. Bei einem Flip-Chip handelt es sich bekanntlich um ein Halbleiterscheibchen mit Planardioden oder Transistoren, deren Anschlüsse auf der Chip-Rückseite liegen. Sie werden in Dünnfilm- oder Dickschicht-Schaltungen eingebaut und waren eine der Übergangsstufen zur integrierten Schaltung

Alle drei genannten Realisierungen zeichnen sich durch eine Eignung für eine kostengünstige Massenfertigung aus.

Bevorzugt ist auch, dass die Sende- und Empfangsvorrichtung in ein Mobiltelefon oder in ein tragbares Datenkommunikationsgerät integriert ist, das zur Kommunikation in mehreren Frequenzbereichen geeignet ist.

Besonders bevorzugt ist, dass die verschiedenen Frequenzbereiche den Dual-Band oder Triband-Frequenzbereichen für Mobiltelefone, für industrielle, wissenschaftliche oder medizinisch lizenzfrei nutzbare ISM-Frequenzen, oder für andere multimode-oder multiband-Anwendungen und/oder Kombinationen von Mobiltelefonen mit Schnurlos-Telefonen entsprechen.

Diese Anwendungen haben ein geringes Einbauraumangebot und die Notwendigkeit gemeinsam, dass Sende- und Empfangsvorrichtungen für mehrere Frequenzen mit guter Empfangsqualität und Sendequalität in dem beschränkten Einbauraum untergebracht werden müssen. Durch die Erfindung lassen sich diese Eigenschaften mit einem Kostenaufwand erzielen, der für den Markt solcher Anwendungen tragbar ist.

Ferner ist bevorzugt, dass Sende-Leistungsverstärker in einer bestimmten baulichen Einheit nicht zusammen (während einer Verbindung, also auch nicht in einem Zeitschlitzverfahren) mit dem in der bestimmten baulichen Einheit untergebrachten rauscharmen Verstärker betrieben wird.

Durch diese Maßnahme wird eine unerwünschte Aufheizung eines bei einer bestimmten Frequenz aktiven Eingangsverstärkers durch einen auf dem gleichen Chip angeordneten Sende-Leistungsverstärker zuverlässig verhindert. Da der auf dem gleichen Chip angeordnete Sende-Leistungsverstärker einer anderen Frequenz zugeordnet ist, wird die Funktion der Anwendung dadurch nicht wesentlich beeinträchtigt.

Weitere Vorteile ergeben sich aus der Beschreibung und der beigefügten Figur.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in der Zeichnung dargestellt und werden in der nach-folgenden Beschreibung näher erläutert.

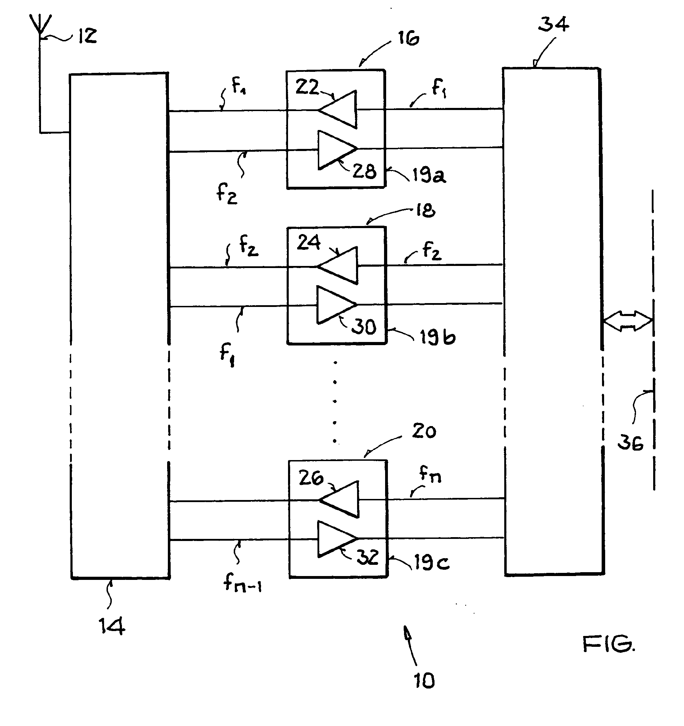

- Fig. 1: zeigt schematisch die Grundstruktur einer Sende- und Empfangseinrichtung als Ausführungsbeispiel der Erfindung.

In der Fig. 1 ist eine Sende und Empfangseinrichtung 10 dargestellt, die über eine Antenne 12 Signale empfängt und/oder abstrahlt. Die Antenne 12 ist über einen Antennen-Umschalter 14 mit einem Ensemble von Chips 16, 18 und 20 verbunden, die jeweils wenigstens einen Sende-Leistungsverstärker 22, 24, oder 26 mit wenigstens einem rauscharmen Eingangsverstärker 28, 30 oder 32 zu einer baulichen Einheit zusammenfassen. Die einzelnen Chips 16, 18 und 20 sind dabei nur qualitativ dargestellt. Insbesondere die dargestellte symmetrische Größenaufteilung zwischen den rauscharmen Eingangsverstärkern 28, 30 und 32 und den Sende-Leistungsverstärkern 22, 24 und 26 entspricht nicht den tatsächlichen Verhältnissen einer realen Chip-Struktur. Dort nehmen die Sende-Leistungsverstärker einen wesentlich größeren Raum ein als die rauscharmen Eingangsverstärker 28, 30 und 32.

Jeder Chip 16, 18, 20 ist auf einer schaltungstechnisch von dem Antennen-Umschalter 14 abgewandten Seite 19a, 19b, 19c mit einem Sender/Empfänger-Baustein (Transceiver) 34 verbunden, der über eine Schnittstelle 36 über die Antenne 12 empfangene Daten und/oder Sprachsignale ausgibt oder Daten und/oder Sprachsignale zur Weiterleitung an die Antenne 12 empfängt.

Die Empfangseinrichtung 10 empfängt und/oder sendet Daten und/oder Sprachsignale über jeweils einen Frequenzbereich. Jedem Frequenzbereich ist ein Paar aus je einem Sendeleistungsverstärker 22, 24 oder 26 und je einem Eingangs-Verstärker 28, 30 oder 32 zugeordnet. Bei n Frequenzen werden bevorzugt n Chips verwendet. Dabei kann die Zuordnung ein-eindeutig sein, so dass jedem Eingangsverstärker 28, 30 oder 32 genau ein Sende-Leistungsverstärker 22, 24 oder 26 zugeordnet ist.

Diese Ausgestaltung ist in der Figur 1 dargestellt, in der der erste Chip 16 eine Sendefrequenz f1 und eine Eingangsfrequenz fn und in der der zweite Chip 18 eine Sendefrequenz f2 und eine Eingangsfrequenz f1 und in der der n-te Chip 20 eine Sendefrequenz fn und eine Eingangsfrequenz fn-1 werstärkt. In dieser Struktur wird beispielsweise ein erstes Paar aus dem Sende-Leistungsverstärker 22 und dem Eingangsverstärker 30 gebildet, das einem Frequenzbereich f1 zugeordnet ist. Ein zweites Paar wird aus dem Sende-Leistungsverstärker 26 und dem Eingangsverstärker 28 gebildet, die einem weiteren Frequenzbereich fn zugeordnet sind.

Jeweils ein Sende-Leistungsverstärker 22, 24, 26 ist mit einem Eingangsverstärker 28, 30, 32 auf einem Chip 16, 18, 20 zu einer baulichen Einheit zusammengefasst, wobei aber ein Eingangsverstärker 30 des ersten Paares in einer anderen baulichen Einheit 18 untergebracht ist, als der baulichen Einheit 16, in der der zugeordnete Sende-Leistungsverstärker 22 untergebracht ist.

Alternativ kann ein Sende-Leistungsverstärker 22 auch mehr als einem Eingangsverstärker 28, 30 oder 32 zugeordnet sein. Das gleiche gilt umgekehrt, so dass jedem Eingangsverstärker 28, 30 oder 32 auch mehr als ein Sende-Leistungsverstärker 22, 24 oder 26 zugeordnet sein kann.

Erfindungsgemäß erfolgt die Zuordnung in jedem Fall so, dass der einem Frequenzbereich zugeordnete Eingangsverstärker, beispielsweise der Eingangsverstärker 28, einem Sende-Leistungs-Verstärker zugeordnet ist, der nicht auf dem gleichen Chip angeordnet ist wie der Eingangsverstärker 28. Diese Bedingung wird beispielsweise durch den Sende-Leistungsverstärker 24 und durch den Sende-Leistungsverstärker 26 erfüllt.

Es versteht sich, dass die Erfindung nicht auf eine Sende- und Empfangsstruktur mit drei Chips 16, 18 und 20 oder mit einer Antenne 12 oder einem Transceiver 34 beschränkt ist. In der elementarsten Form der Erfindung ist allein wesentlich, dass wenigstens ein Sende-Leistungsverstärker 22, 24, 26 mit einem Eingangs-Verstärker 28, 30 32 eine bauliche Einheit bildet, aber nicht mit diesem zusammen in einer Kommunikationsverbindung benutzt wird. Es können daher auch beispielsweise zwei oder n Chips 16, 18, 20 vorhanden sein. Ähnlich können auch mehrere Antennen 12 und/oder Transceiver 34 vorhanden sein.

Im Folgenden wird als Beispiel ein Dreiband-Mobiltelefon betrachtet. Bei einem solchen Dreiband-Mobiltelefon erfolgt die Kommunikation, je nach zur Verfügung stehendem Netz, wahlweise mit einer von drei Frequenzen. Dabei ist die Frequenz in der Regel durch das Netz festgelegt, das den Aufenthaltsort des Mobiltelefons abdeckt. Zur Zeit werden mehrere Systeme verwendet. Als Beispiele können das DCS (Digital Cellular System), das mit Frequenzen von 1710-1880 MHz arbeitet, und das GSM (Global System for Mobile Communications), das im Frequenzbereich von 870-960 MHz arbeitet, genannt werden. Weitere Netze werden derzeit aufgebaut. Ein Beispiel für ein solches Netz ist das UMTS (Universal Mobile Telephone Service), das in einem Frequenzbereich von 1900-2170 MHz arbeitet.

Im folgenden Beispiel sendet die Sende- und Empfangsvorrichtung 10 in einem bestimmten Frequenzbereich, dem der Sende-Leistungsverstärker 26 auf dem Chip 20 und der Eingangs-Verstärker 28 auf dem Chip 16 zugeordnet ist. Durch den Betrieb des Sende-Leistungsverstärkers 26 erwärmt sich der Chip 20, was theoretisch zu einer Verschlechterung des Signal/Rausch-Verhältnisses im Eingangsverstärker 32 führt, der auf dem Chip 20 beispielsweise einen Teil einer monolithisch integrierten Schaltung bildet, die auch den Leistungs-Sendeverstärker 26 umfasst.

Die tatsächliche Empfangsqualität wird dagegen durch die Aufheizung des Chips 20 nicht beeinträchtigt, weil der dem betrachteten Frequenzbereich zugeordnete Eingangsverstärker 28 auf einem separaten Chip 16 angeordnet ist.

Mit anderen Worten: Auf der gemeinsamen Halbleitersubstratmaterialfläche eines Chips 16, 18 oder 20 wird ein Eingangsverstärker 28, 30 oder 32 mit niedriger Rauschzahl (Low Noise Amplifier LNA) für ein bestimmtes Netz und ein Sende-Leistungsverstärker (Power Amplifier) 22, 24 oder 26 für jeweils ein anderes Netz (zum Beispiel gemäß IEEE -Standard 802.11 a und b/g oder GSM 900 MHz und DCS 1800 u. 1900 MHZ (Triband)) integriert. Die auf einem Chip 16 angeordneten Sende- Leistungsverstärker 28 und Eingangsverstärker 22 werden nicht gemeinsam in einer Verbindung betrieben. Sie werden insbesondere auch nicht abwechseln in einen Zeitschlitzverfahren gemeinsam in einer Verbindung betrieben. Dies gilt analog für den Chip 18 mit seinen Verstärkern 24 und 30 und für den Chip 20 mit seinen Verstärkern 26 und 32. Dadurch wird die Erwärmung des Chips, der den aktiven Eingangsverstärker trägt, wesentlich reduziert. Als Folge wird die sonst zu erwartende Erhöhung der Rauschzahl und eine thermisch bedingte Kennlinienverschiebung vermieden.

Es versteht sich, dass dieses Prinzip nicht nur bei Dreiband-Mobiltelefonen angewandt werden kann, sondern auch für andere multiband- oder multimode Systeme eingesetzt werden kann. Es gibt prinzipiell hierbei keine Beschränkung der Anzahl der verschiedenen kombinierbaren Systeme. Auch sind Kombinationen von zellularen Telefonen (z. B. GSM, UMTS) sowie Schnurlostelefonen (z. B. DECT) möglich.

## Patentansprüche

1. Sende- und Empfangsvorrichtung (10) mit wenigstens zwei Paaren aus je einem Sende-Leistungsverstärker (22, 24, 26) und einem rauscharmen Eingangsverstärker (28, 30, 32), wobei die Paare verschiedenen Frequenzbereichen zugeordnet sind, und wobei jeweils wenigstens ein Sende-Leistungsverstärker (22, 24, 26) und wenigstens ein rauscharmer Eingangsverstärker (28, 30, 32) zu einer baulichen Einheit zusammengefasst sind, **dadurch gekennzeichnet, dass** ein Eingangsverstärker (28, 30, 32) eines ersten Paares in einer anderen baulichen Einheit untergebracht ist, als der baulichen Einheit, in der sein zugeordneter Sende-Leistungsverstärker (22, 24, 26) untergebracht ist.

2. Sende- und Empfangsvorrichtung (10) nach Anspruch 1, **dadurch gekennzeichnet, dass** jeweils wenigstens ein Sende-Leistungsverstärker (22, 24, 26) und wenigstens ein rauscharmer Eingangsverstärker (28, 30, 32) auf einem gemeinsamen Chip (16, 18, 20) als bauliche Einheit zusammengefasst sind.

3. Sende- und Empfangsvorrichtung (10) nach Anspruch 2, **dadurch gekennzeichnet, dass** die Sende-Leistungsverstärker (22, 24, 26) und die rauscharmen Eingangsverstärker (28, 30, 32) als monolithisch integrierte Schaltkreise auf Siliziumbasis oder Gallium-Arsenid-Basis realisiert sind.

4. Sende- und Empfangsvorrichtung (10) nach Anspruch 2 oder 3, **gekennzeichnet durch** eine Ausführung in Form von gebondeten integrierten Schaltungen, als Flip-Chip in einem Gehäuse, oder in Form von Modulen auf einem gesonderten Substratträger.

5. Sende- und Empfangsvorrichtung (10) nach einem der vorhergehenden Ansprüche, **dadurch gekennzeichnet, dass** sie in ein Mobiltelefon oder tragbares Datenkommunikationsgerät integriert ist.

6. Sende- und Empfangsvorrichtung (10) nach einem der vorhergehenden Ansprüche, **dadurch gekennzeichnet, dass** die verschiedenen Frequenzbereiche den Dual-Band oder Triband-Frequenzbereichen für Mobiltelefone, den für industrielle, wissenschaftliche oder medizinisch lizenzfrei nutzbaren ISM-Frequenzen, oder anderen Frequenzen für multimode- oder multiband- Anwendungen und/oder Kombinationen von Mobiltelefonen mit Schnurlos-Telefonen entsprechen.

7. Sende- und Empfangsvorrichtung (10) nach einem der vorhergehenden Ansprüche, **dadurch gekennzeichnet, dass** ein Sende-Leistungsverstärker (22, 24, 26) in einer bestimmten baulichen Einheit nicht zusammen mit dem in der bestimmten baulichen Einheit untergebrachten rauscharmen Eingangsverstärker (28, 30, 32) betrieben wird.

8. Verfahren zum Betrieb einer Sende- und Empfangsvorrichtung (10) mit wenigstens zwei Paaren aus je einem Sendeleistungsverstärker (22, 24, 26) und einem rauscharmen Eingangsverstärker (28, 30, 32), wobei die Paare verschiedenen Frequenzbereichen zugeordnet sind, und wobei jeweils wenigstens ein Sende-Leistungsverstärker (22, 24, 26) und wenigstens ein rauscharmer Eingangsverstärker (28, 30, 32) als integrierte Schaltung auf einem gemeinsamen Chip (16, 18, 20) untergebracht ist, **dadurch gekennzeichnet dass** beim Betrieb der Sende- und Empfangsvorrichtung (10) in einem der Frequenzbereiche für die Verstärkung empfangener Signale ein rauscharmer Eingangsverstärker (28, 30, 32) verwendet wird, der auf einem anderen Chip (16, 18, 20) angeordnet ist als der Sendeleistungsverstärker (22, 24, 26), der mit dem rauscharmen Verstärker (28, 30, 32) ein dem Frequenzbereich zugeordnetes Paar bildet.
